# EUROPÄISCHE PATENTSCHRIFT

(11) **EP 0 345 829 B1**
(45) Veröffentlichungstag und Bekanntmachung des Hinweises auf die Patenterteilung: **11.05.1994**
(21) Anmeldenummer: 89114109.5
(22) Anmeldetag: 17.07.1986
(51) Int. Cl.: A01F 12/40

(54) **Mähdrescher mit Anbauhäcksler**
Combine harvester with a straw chopper
Moissonneuse-batteuse équipée d'un hache-paille

(30) Priorität: 08.08.1985 DE 3528538; 22.01.1986 DE 3601777; 20.06.1986 DE 3620747
(43) Veröffentlichungstag der Anmeldung: 13.12.1989
(62) Teilanmeldung aus: 86109828.3
(73) Patentinhaber: BISO GmbH Maschinenfabrik, D-32289 Rödinghausen (DE)
(72) Erfinder: Scharf, Alois, D-4520 Melle 8 St. Annen (DE)
(74) Vertreter: Zinnecker, Armin, Dipl.-Ing.

(56) Entgegenhaltungen:
- DE-A- 2 444 550
- DE-B- 2 810 176
- DE-C- 194 433
- DE-C- 413 515
- DE-U- 8 202 574
- FR-A- 1 338 698
- FR-A- 2 108 333
- FR-A- 2 133 576
- FR-A- 2 427 040
- GB-A- 1 082 832
- GB-A- 2 021 375
- GB-A- 2 028 086
- US-A- 3 669 123
- US-A- 4 056 107
- DEUTSCHE AGRARTECHNIK. vol. 17, no. 6, Juni 1967, BERLIN DD Seite 263 "eine anbau-hackselvorrichtung zum mahdrescher"

## Beschreibung

Die Erfindung betrifft einen Mähdrescher mit einem Anbauhäcksler nach dem Oberbegriff des Anspruchs 1.

Wenn das Strohleitblech wegen mangelnder Platzverhältnisse nicht steil genug in dem Mähdrescher eingebaut werden kann oder wenn der Mähdrescher in unebenem Gelände arbeitet, kann sich das Stroh auf dem Strohleitblech ablagern. Diese Ablagerung kann in extremen Fällen so stark sein, daß sich in dem Mähdrescher bzw. in der Haube Stroh staut und Schäden an den Schüttlern verursacht.

Aus der US-A 3 669 123 ist ein Mähdrescher nach dem Oberbegriff des Anspruchs 1 bekannt. Bei diesem vorbekannten Mähdrescher ist ein Spreuleitblech vorgesehen, das mit dem Siebkasten verbunden ist und das zur Förderung der von den Sieben abgeworfenen Spreu dient.

Aus der DE-U-8 202 574 ist ein weiterer Mähdrescher bekannt, bei dem eine Strohleitvorrichtung vorgesehen ist, die aus einer nahezu horizontal angeordneten Strohleitvorrichtung und einem daran anschließenden, relativ steil angeordneten Strohleitblech besteht. Die nahezu horizontale Strohleitvorrichtung besteht aus einer Anzahl gleicher, paralleler, in Förderichtung des Strohs verlaufender Rohre oder Blechen. Die Rohre bzw. Bleche sind mit Seitenschildern verbunden, die um eine mit den Siebkästen verbundene Achse schwenkbar gelagert sind. In Folge der hin- und hergehenden Bewegung des Siebkastens und eines im Mähdrescher fest angeordneten waagerechten Auflagerholms kommt eine Schwenkbewegung der Strohleitvorrichtung zustande.

Aufgabe der Erfindung ist es, in zuverlässiger und einfacher Weise einen kontinuierlichen Strohfluß zu gewährleisten.

Erfindungsgemäß wird diese Aufgabe durch im kennzeichnenden Teil des Anspruchs 1 angegebenen Merkmale gelöst. Das Strohleitblech kann verschwenkt werden, und zwar in eine erste Stellung, in der das Stroh in die Einzugsöffnung des Anbauhäckslers geführt wird, und in eine zweite Stellung, in der die Einzugsöffnung des Anbauhäckslers abgedeckt ist. In der ersten Stellung findet Häckselbetrieb statt, in der zweiten Stellung Langablage. Ferner kann das Strohleitblech in eine Schwingbewegung versetzt werden. Diese Schwingbewegung kann in vorteilhafter Weise durch rotierende Exzenter erzeugt werden, die an dem Strohleitblech angeordnet sind. Diese erfindungsgemäße Ausgestaltung gewährleistet, daß sich das Stroh nicht auf dem Strohleitblech ablagern, sich nicht in dem Mähdrescher bzw. in dessen Haube stauen und Schäden an den Schüttlern verursachen kann.

Eine weitere Lösung der oben angegebenen Aufgabe, für die selbständig Schutz begehrt wird, ist dadurch gekennzeichnet, daß das Strohleitblech als geschlossener Hohlkörper ausgebildet ist und Luftaustrittsschlitze aufweist.

Weitere vorteilhafte Ausgestaltungen der Erfindung sind Gegenstand weiterer Unteransprüche.

Ausführungsbeispiele der Erfindung werden nachstehend anhand der Zeichnung näher erläutert. In dieser zeigt
- Fig. 1: eine Seitenansicht auf den hinteren Endbereich des Mähdreschers mit dem Anbauhäcksler,
- Fig. 2: eine der Fig. 1 entsprechende Seitenansicht der gegenüberliegenden Seite des Mähdreschers mit Anbauhäcksler,
- Fig. 3: eine Rückansicht des Mähdreschers mit Anbauhäcksler nach den Fig. 1 und 2,
- Fig. 4: einen Schnitt durch den Mähdrescher nach der Linie A - B in Fig. 3,
- Fig. 5: eine Seitenansicht auf den hinteren Endbereich einer erfindungsgemäßigen Ausführungsform eines Mähdreschers mit dem Anbauhäcksler,
- Fig. 6: in einer Seitenansicht eine schematische Darstellung der Stellungen des Strohleitblechs,
- Fig. 7 bis 10: Seitenansichten der Schwenkwelle und des mit dieser verbundenen Kurbeltriebs,
- Fig. 11: in einer Seitenansicht eine schematische Darstellung der Schwenkwelle, des Strohleitblechs in verschiedenen Stellungen und der mit der Schwenkwelle verbundenen Unwucht,
- Fig. 12: die Ausführungsform gemäß Fig.11 in einer Frontansicht,
- Fig. 13: in einer Seitenansicht eine schematische Darstellung des Strohleitblechs in verschiedenen Stellungen, wobei das Strohleitblech aus zwei gelenkig miteinander verbundenen Teilen besteht,
- Fig. 14: eine Seitenansicht des Strohleitblechs in verschiedenen Stellungen, wobei das Strohleitblech als geschlossener Hohlkörper ausgebildet ist und Luftaustrittsschlitze aufweist,
- Fig. 15: in einer Seitenansicht das Strohleitblech in verschiedenen Stellungen, wobei das Strohleitblech ein umlaufendes Band aufweist,
- Fig. 16: die Ausführungsform gemäß Fig. 15 in einer Frontansicht und
- Fig. 17: in einer Seitenansicht eine Ausführungsform der Erfindung, bei der der Anbauhäcksler verschwenkbar ist, sowie drei weitere Ausgestaltungen des Strohleitblechs.

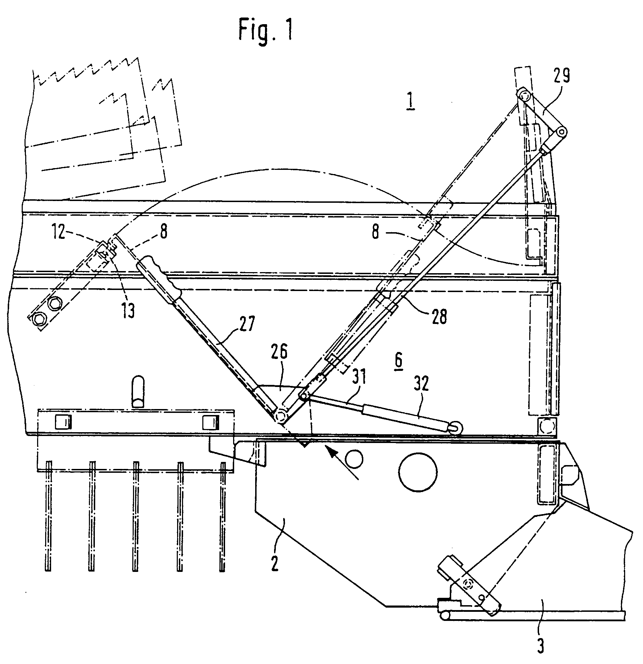

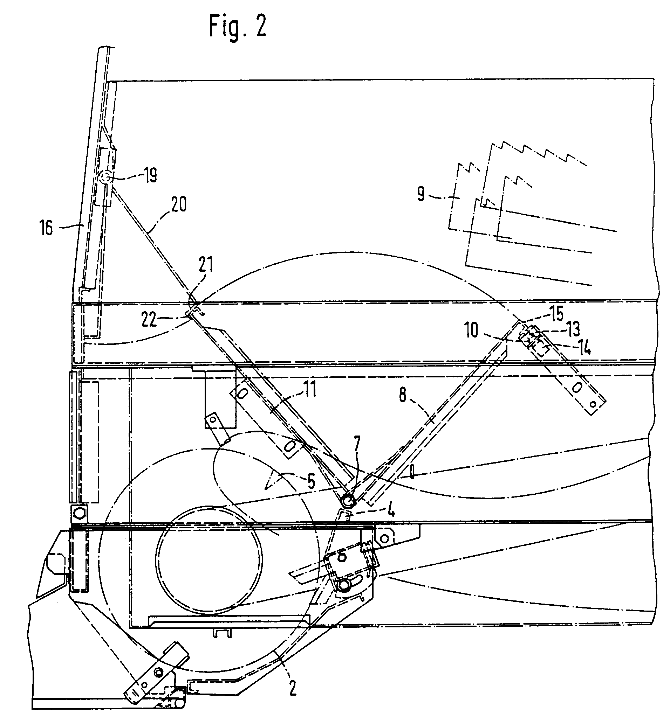

Unterhalb der hinteren Abdeckhaube 1 des Mähdreschers ist an einem umlaufenden Rahmen oder umlaufenden, aus Blechen gebildeten Trägern in üblicher Weise der Anbauhäcksler 2 angebaut, dessen Auswurföffnung mit einer haubenförmigen, Strohverteilungsbleche aufweisenden Strohverteileinrichtung 3 versehen ist. Oberhalb und unmittelbar angrenzend an die innere Kante 4 der Einzugsöffnung 5 des Anbauhäckslers 2 ist in seitlichen Wandungen 6 des Mähdreschers die Schwenkwelle 7 drehbar gelagert, die fest mit dem unteren Strohleitblech 8 verbunden ist. Das Strohleitblech 8 ist in der aus den Fig. 1 und 2 ersichtlichen Weise zwischen seiner nach innen geschwenkten Stellung unter den Schüttlern 9 und seiner nach außen geschwenkten Stellung, in der es die Einzugsöffnung 5 des Anbauhäckslers 2 schräg abdeckt, verschwenkbar. Beide Endstellungen sind durch Anschläge 10, 11, 12, die an den Seitenwandungen des Mähdreschers vorgesehen sind, gesichert. Zur Sicherung der Endstellungen sind die Anschläge mit axial verschieblichen Bolzen 13 versehen, die durch Elektromagnete 14 beweglich sind und zur Verriegelung des unteren Strohleitblechs 8 in entsprechende Öffnungen des äußeren Schenkels des U-förmig nach außen gebogenen Randes 15 eingreifen.

Oberhalb des Anbauhäckslers 2 ist in mit dem hinteren Heckblech 16 oder den Seitenwandungen 17 verbundenen Lagern die Schwenkwelle 19 gelagert, auf der das obere Strohleitblech 20 befestigt ist. Dieses obere Strohleitblech 20 ist in der aus Fig. 2 ersichtlichen Weise zwischen sein an das Heckblech 16 angeschwenkten und seiner mit dem unteren Strohleitblech 8 fluchtenden Stellung verschwenkbar. Die frei schwenkbare Seite des oberen Strohleitblechs 20 ist mit einem Z-förmig gekröpften Rand 21 versehen, wobei dessen zu dem Strohleitblech paralleler, eine Stufe bildender Schenkel 22 einen Anschlag für den oberen Rand des unteren Strohleitblechs 8 in der fluchtenden Stellung beider Strohleitbleche bildet.

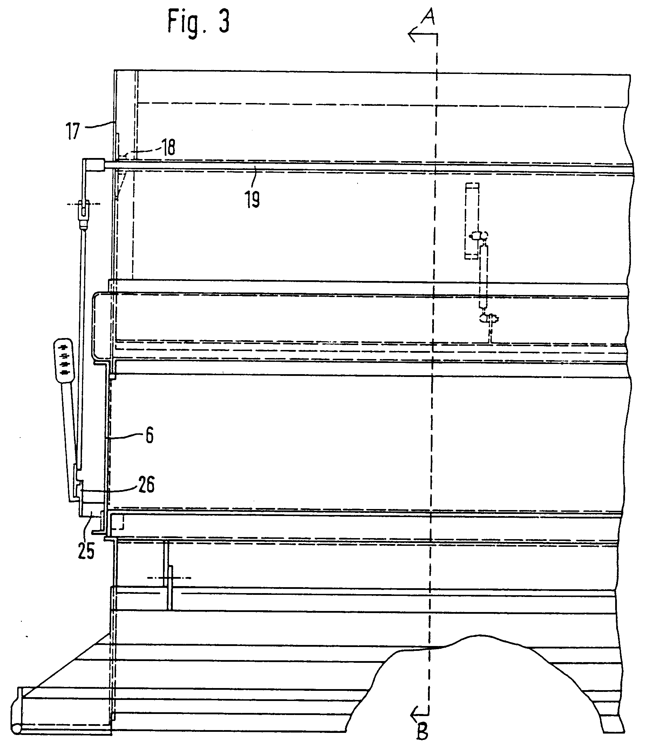

Auf den durch das Seitenblech 6 des Mähdreschers nach außen geführten Zapfen 25 der Schwenkwelle 7 des unteren Strohleitblechs 8 ist in der aus den Fig. 1 und 3 ersichtlichen Weise ein dreieckiges Blech 26 aufgeschweißt, das fest mit dem von Hand betätigbaren Hebel 27 verbunden ist. Das Blech 13 ist weiterhin gelenkig mit der Koppelstange 28 verbunden, deren anderes Ende an den Hebel 29 angelenkt ist, der fest mit dem nach außen geführten Zapfen der Welle 19 verbunden ist. Das Blech 26 und der Hebel 29 sind dabei derart mit den Schwenkwellen verbunden und die Anlenkpunkte der Koppelstange 28 sind derart gewählt, daß durch Betätigung des Handhebels 27 das untere und obere Strohleitblech 8, 20 zwischen ihren Stellungen bei Häckslerbetrieb und Langablage des Strohs verschwenkt werden.

Zusätzlich ist das dreieckige Blech 26 mit der Kolbenstange 31 der Gasfeder 32 gelenkig verbunden, deren Zylinder an der Seitenwand 6 angelenkt ist. Dabei ist die Anlenkung so gewählt, daß die Gasfeder bei ihrer Verschwenkung zwischen den beiden Schwenklagen des unteren Strohleitblechs 8 ihre Totpunktstellung durchwandert.

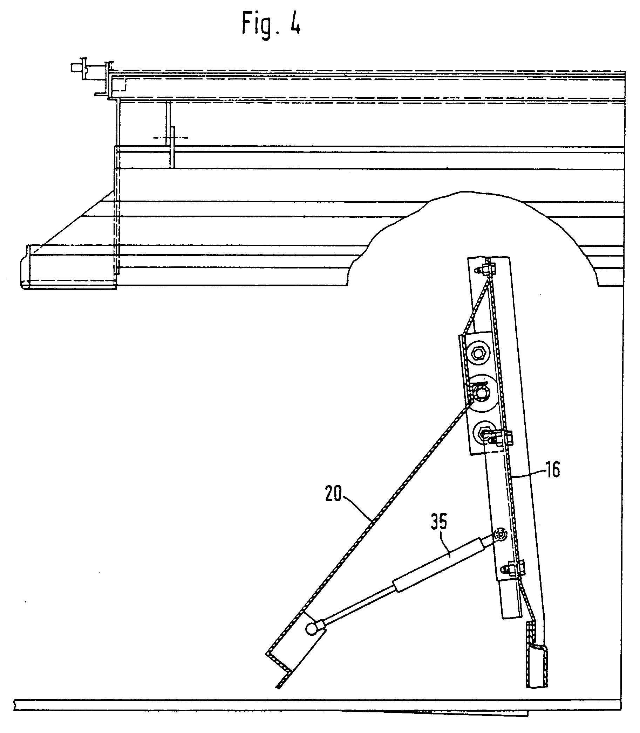

Auch das obere Strohleitblech 20 ist in der aus den Fig. 3 und 4 ersichtlichen Weise mit einer Gasfeder 35 versehen, die einerseits an dem Heckblech 16 und andererseits im oberen Endbereich an das obere Strohleitblech 20 angelenkt ist. Diese Gasfeder fixiert das obere Strohleitblech 20 in der ausgeschwenkten Stellung.

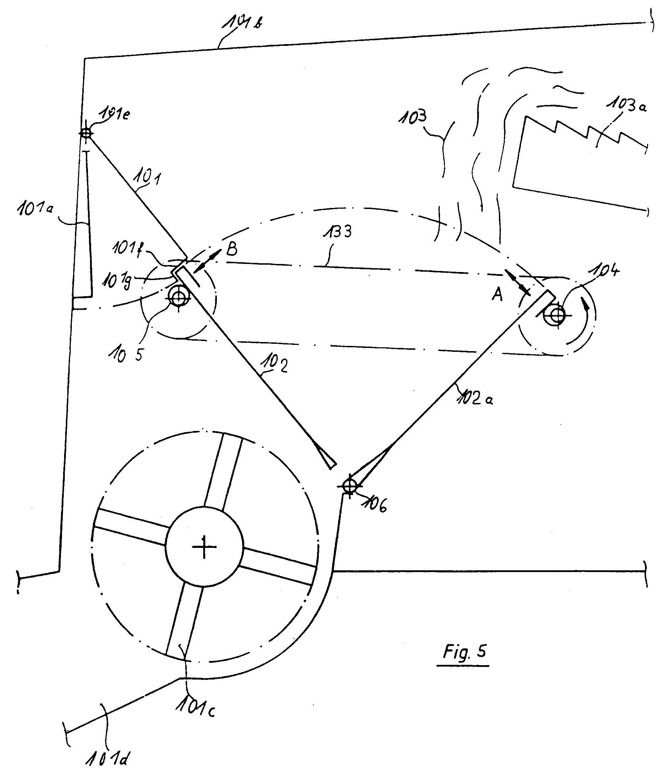

In Fig. 5 ist in einer Seitenansicht der hintere Teil einer erfindungsgemäßigen Ausführungsform eines Mähdreschers gezeigt. Unterhalb der hinteren Abdeckhaube 101b des Mähdreschers ist an einem umlaufenden Rahmen oder umlaufenden, aus Blechen gebildeten Trägern in üblicher Weise der Anbauhäcksler 101c angebaut, dessen Auswurföffnung mit einer haubenförmigen, Strohverteilungsbleche aufweisenden Strohverteileinrichtung 101d versehen ist. Oberhalb des Anbauhäckslers 101c ist in seitlichen Wandungen des Mähdreschers die Schwenkmelle 106 drehbar gelagert, die fest mit dem unteren Strohleitblech 102, 102a verbunden ist. Das Strohleitblech ist in der aus Fig. 5 ersichtlichen Weise zwischen seiner nach innen geschwenkten Stellung 102a unter den Schüttlern 103a und seiner nach außen geschwenkten Stellung 102, in der es die Einzugsöffnung des Anbauhäckslers 101c schräg abdeckt, verschwenkbar. Beide Endstellungen sind durch Anschläge 104, 105, die an den Seitenwandungen des Mähdreschers vorgesehen sind, gesichert. Die Anschläge können aus Exzentern bestehen, um eine Einstellung zu ermöglichen.

Die Bezugsziffer 102a zeigt die Stellung des Strohleitblechs bei Häckselbetrieb, die Bezugsziffer 102 zeigt die Stellung des Strohleitblechs bei Langablage. Die Anschläge 104, 105 bestehen aus rotierenden Exzentern, die das obere Ende des Strohleitblechs in eine durch die Doppelpfeile A, B angedeutete Hin- und Herbewegung versetzen. Dabei ist das Strohleitblech in beiden Stellungen 102, 102a um die Schwenkwelle 106 drehbar gelagert. Durch die Schwingbewegung in Richtung der Doppelpfeile A, B wird eine sichere Förderwirkung erreicht. Die Schwingbewegung ist sowohl bei Langablage als auch bei Häckselbetrieb möglich. Sie wird bei Langablage durch den rotierenden Exzenter 105 und bei Häckselbetrieb durch den rotierenden Exzenter 104 erzeugt. Die Exzenter 104, 105 werden in der Mähdrescher-Seitenwand gelagert und können als Einzelstücke oder als durchgehene Exzenterwelle gestaltet sein. Der Antrieb kann mechanisch, insbesondere über Keilriemen, elektrisch oder hydraulisch erfolgen. Bei mechanischem Antrieb können die Exzenter 104, 105 durch einen Riementrieb 133 gemeinsam angetrieben werden (Figur 5).

Oberhalb des Anbauhäckslers 101c ist in mit dem hinteren Heckblech oder den Seitenwandungen verbundenen Lagern die Schwenkwelle 101e gelagert, auf der das obere Strohleitblech 101, 101a befestigt ist. Dieses obere Strohleitblech ist zwischen seiner an das Heckblech angeschwenkten Stellung 101a und seiner mit dem unteren Strohleitblech 102, 102a fluchtenden Stellung 101 verschwenkbar. Die frei schwenkbare Seite des oberen Strohleitblechs 101 ist mit einem Z-förmig gekröpften Rand 101f versehen, wobei dessen zu dem Strohleitblech paralleler, eine Stufe bildender Schenkel 101g einen Anschlag für den oberen Rand des unteren Strohleitblechs 102, 102a in der fluchtenden Stellung 101, 102 beider Strohleitbleche bildet.

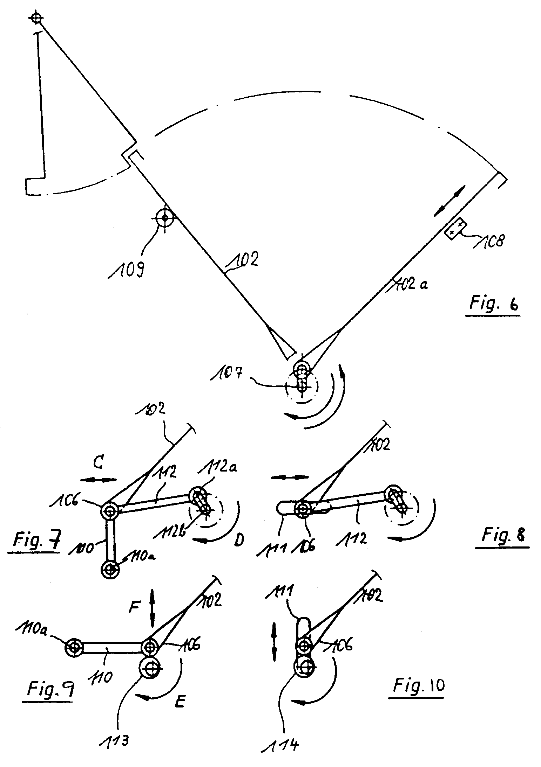

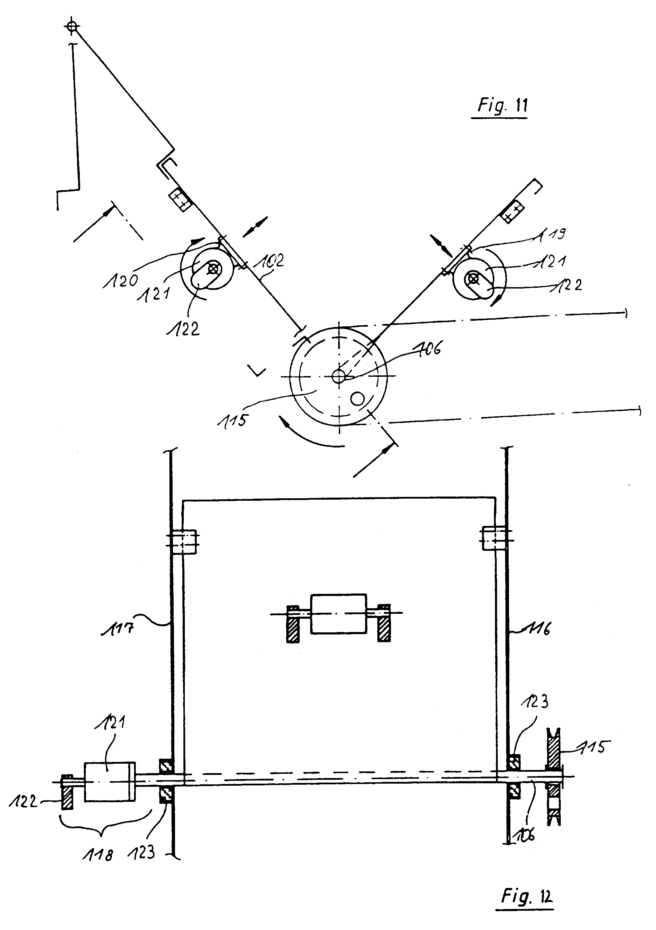

In Fig. 6 ist das Strohleitblech 102, 102a auf einer Exzenterwelle oder Kurbelwelle 107 gelagert und führt eine Auf-/Ab-Pendelbewegung aus. Als Anschlag kann ein Gleitstück 108 aus Kunststoff oder eine Rolle 109 dienen. Der Antrieb erfolgt in gleicher Weise wie bei der in Fig. 5 dargestellten Ausführungsform.

Fig. 7 zeigt die Erzeugung einer Rüttelbewegung durch einen Kurbeltrieb. Das Strohleitblech 102 ist dabei mit der Schwenkwelle 106 verbunden. Die Schwenkwelle 106 ist über eine Gelenkstange 110 um den fest mit dem Mähdrescher verbundenen Punkt 110a verschwenkbar gelagert. Die Schwenkwelle 106 ist weiterhin mit einer Pleuelstange 112 fest verbunden, deren anderes Ende 112a exzentrisch um den Punkt 112b drehbar gelagert ist. Durch die Rotationsbewegung des Endes 112a der Pleuelstange 112 um den Punkt 112b gemäß der Pfeilrichtung D führt die Schwenkwelle 106 eine Hin- und Herbewegung gemäß dem Doppelpfeil C aus. Zur waagrechten Führung dient dabei die um den Punkt 110a schwenkbar gelagerte Gelenkstange 110. Bei kleinen Hubbewegungen kann die Gelenkstange 110 auch durch eine Blattfeder ersetzt werden.

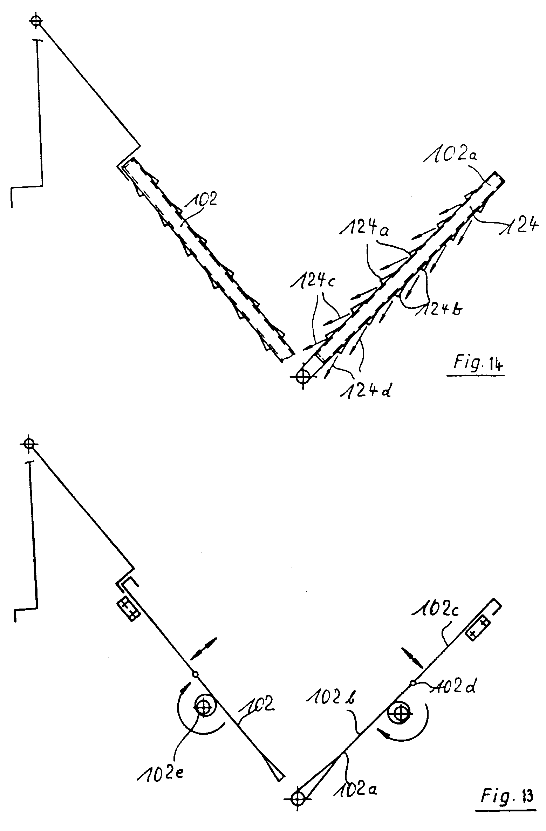

Die in Fig. 8 dargestellte Ausführungsform entspricht im wesentlichen derjenigen nach Fig. 7. Dabei ist jedoch die Gelenkstange 110 ersetzt worden durch einen der waagrechten Führung der Schwenkwelle 106 dienenden Längsschlitz 111, der in der Mähdrescherseitenwand ausgebildet sein kann. Zur waagrechten Führung der Schwenkwelle 106 können neben der in Fig. 7 gezeigten Gelenkstange 110 und dem in Fig. 8 gezeigten Längsschlitz 111 auch andere Lagerelemente für Linearbewegungen verwendet werden. Bei günstigen Einbauverhältnissen kann die Schüttlerwelle, also die Antriebswelle des Schüttlers 103a, als Kurbelwelle 112a, 112b (Fig. 7) herangezogen werden oder es können die Pleuelstangen 112 am Schüttler 103a oder an den Siebkästen befestigt werden.

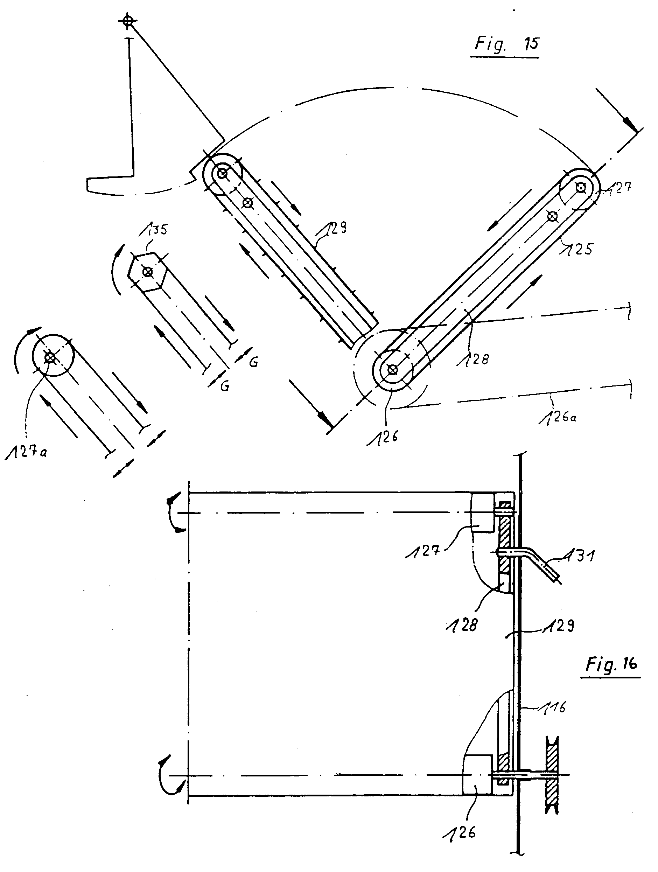

In der Ausführungsform gemäß Fig. 9 wird die Rüttelbewegung des Strohleitblechs 102 durch einen in Pfeilrichtung E rotierenden Exzenter 113 erzeugt, der die Schwenmelle 106 in eine durch den Doppelpfeil F angedeutete Hin- und Herbewegung versetzt. Die Führung in senkrechter Richtung erfolgt dabei durch eine Gelenkstange 110, die an ihrem einen Ende am Punkt 110a mit dem Mähdrescher und an ihrem anderen Ende mit der Schwenkwelle jeweils schwenkbar verbunden ist.

Die Ausführungsform nach Fig. 10 entspricht im wesentlichen derjenigen nach Fig. 9. Die Gelenkstange 110 wurde jedoch durch den Längsschlitz 111 zur Erreichung einer Führung in senkrechter Richtung für die Schwenkwelle 106 ersetzt.

In der Ausführungsform gemäß den Fig. 11 und 12 führt das Strohleitblech 102 keine Hin- und Herbewegung aus, sondern wird in Vibration versetzt. Als Erreger dienen umlaufende Massen, die mit einer Unwucht versehen sind. Die als Erreger dienende, unwuchtbehaftete, umlaufende Masse kann z.B. eine Keilriemenscheibe 115 sein, die sich auf der Drehachse 106 des Strohleitblechs 102 befindet. Der Vibrator kann aber auch als separate Baueinheit 118 seitlich an die Drehachse 106 angeflanscht werden. Er kann auch direkt am Strohleitblech 102 befestigt werden, beispielsweise an den mit den Bezugsziffern 119, 120 bezeichneten Stellen. In diesem Fall besteht der Vibrator beispielsweise aus einem Hydro-, Pneumatik- oder Elektromotor mit Umlaufgewicht oder aus einem elektromagnetisch angeregten Feder-Masse-System. Um große Schwingungsausschläge des Strohleitblechs 102 zu ermöglichen und zu verhindern, daß Schwingungen auf den Mähdrescher übertragen werden, ist das Strohleitblech 102 in Weichgummiblocks 123 gelagert. Die soeben beschriebenen Vibratoren können vollkommen staub- und wasserdicht gekapselt werden.

In der Ausführungsform gemäß Fig. 13 ist das untere Strohleitblech 102, 102a aus zwei Teilen 102b und 102c aufgebaut, die durch das Gelenk 102d gelenkig miteinander verbunden sind. Oberhalb oder unterhalb des Gelenkes erzeugt ein Exzenter 102e eine Schwingbewegung. Der Antrieb des Exzenters erfolgt wie in dem in Fig. 5 dargestellten Ausführungsbeispiel.

In Fig. 14 ist das Strohleitblech 102, 102a als geschlossener Hohlkörper 124 ausgebildet. An der Oberseite des geschlossenen Hohlkörpers 124 befinden sich auf beiden Seiten Luftaustrittsschlitze 124a, 124b, die quer zur Fahrtrichtung ausgebildet sind. Von einem externen Gebläse, das nicht in der Zeichnung dargestellt ist, wird Luft in den Hohlkörper 124 geblasen. Die Luft strömt in Richtung der Pfeile 124c und 124d aus den Luftaustrittsschlitzen 124a, 124b aus und fördert dadurch das Stroh in die gewünschte Richtung. Das als geschlossener Hohlkörper 124 ausgebildete Strohleitblech 102, 102a ist in Fig. 14 in zwei Stellungen gezeigt. Die mit dem Bezugszeichen 102 bezeichnete Stellung entspricht der Stellung bei Langablage, die durch das Bezugszeichen 102a bezeichnete Stellung entspricht der Stellung bei Häckslerbetrieb. Bei Häckslerbetrieb (Stellung 102a) werden an sich nur die Luftaustrittsschlitze 124a zur Förderung des Strohs benötigt, nicht jedoch die Luftaustrittsschlitze 124b. In der Stellung 102 des als geschlossener Hohlkörper 124 ausgebildeten Strohleitblechs (Stellung bei Langablage) werden umgekehrt an sich nur die Luftaustrittsschlitze 124b benötigt. Zur Verringerung der Gebläseleistung kann deshalb der Innenraum des Hohlkörpers 124, in Längsrichtung unterteilt werden. Es wird dann jeweils nur diejenige Seite des unterteilten Innenraums benutzt, d.h. mit Druckluft versorgt, die zur Förderung des Strohs Druckluft durch die Luftaustrittsschlitze 124a, 124b abgeben muß. Bei Langablage ist dies diejenige Seite des geschlossenen Hohlkörpers 124 auf der sich die Luftaustrittsschlitze 124b befinden, bei Häckselbetrieb ist dies die andere Seite, auf der sich die Luftaustrittsschlitze 124a befinden.

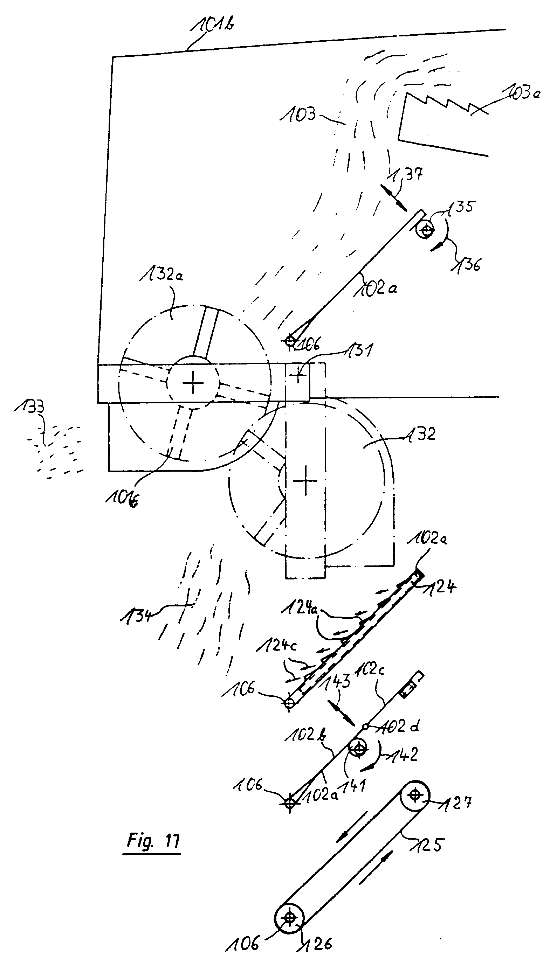

Wenn der Anbauhäcksler nicht fest in dem Mähdrescher montiert ist, sondern auf Führungen des Mähdreschers nach vorne verfahren und dort fixiert werden kann, oder wenn er um einen Drehpunkt nach vorne verschwenkt werden kann, so daß die Auswurföffnung des Mähdreschers für das Stroh freigegeben wird und das Stroh als Langstroh auf das Feld abgeworfen werden kann, ist das Strohleitblech nicht verschwenkbar, sondern fest eingebaut. Bei einem derartig fest eingebauten, also nicht umklappbaren Strohleitblech befinden sich die Luftaustrittsschlitze 124a, 124b nur auf einer Seite des als geschlossener Hohlkörper 124 ausgebildeten Strohleitblechs 102, wie dies in der Figur 17 oben dargestellt ist.

In der in den Fig. 15 und 16 dargestellten Ausführungsform dient als Strohleitfläche ein umlaufendes Band 125. Das umlaufende Band 125 wird von der Welle 126 angetrieben und durch die Welle 127 umgelenkt. Um von Häckselbetrieb auf Langablage wechseln zu können, wird die Umlenkwelle 127 in zwei klappbaren Haltern 128 gelagert, die an ihrer anderen Seite mit der Schwenkwelle 126 verbunden sind. Da das umlaufende Band bei Häckselbetrieb und bei Langablage in jeweils umgekehrter Richtung laufen muß, ist bei der Welle 126 ein Drehrichtungswechsel vorgesehen. Dieser kann z.B. durch Kreuzen des Riementriebs 126a erfolgen. Als umlaufendes Band 125 kann jedes für Gurtförderer bekannte Material verwendet werden. Die Förderfläche kann glatt oder profiliert (siehe Bezugszeichen 129) ausgebildet sein. Statt eines Gurtförderers kann auch ein Kratzförderer eingesetzt werden.

Falls der Häcksler verschiebbar oder verschwenkbar ist und deshalb das Strohleitblech fest eingebaut ist, kann die Welle 127 unmittelbar in den Seitenwänden des Mähdreschers gelagert werden, wie dies in Figur 17 dargestellt ist.

Die in der Fig. 15 dargestellten Rollen 126 und 127 können mit Erhebungen versehen sein, also "bucklig" ausgestaltet sein, um das umlaufende Band 125 in Schwingungen zu versetzen. Diese Schwingungen sind in Figur 15 durch die Doppelpfeile G dargestellt. Anstelle der Erhebungen kann auch ein Rollenpaar exzentrisch (127a) auf der Welle angeordnet sein, um die Schwingungen auf diese Weise zu erzeugen. Die Rollen 126 und 127 können zu demselben Zweck auch beide exzentrisch gelagert sein. Es ist auch möglich, nur eine der Rollen (Riemenscheiben) exzentrisch auf der Welle anzuordnen. Wie in Figur 15 ebenfalls dargestellt, können die Wellen 126 und 127 als Vieleck (Quadratrohr, Sechskantrohr) 135 gestaltet sein, wobei dem umlaufenden Band 125 durch den Polygoneffekt eine Schwingbewegung überlagert wird, die die Förderwirkung verbessert.

Bei dem in Fig. 17 dargestellten Ausführungsbeispiel befindet sich der Häcksler 101c im hinteren Teil 101b des Mähdreschers.

Der Häcksler 101c ist um die Schwenkachse 131 aus der bei dem Bezugszeichen 132a gezeigten Stellung in die bei dem Bezugszeichen 132 dargestellte Stellung verschwenkbar. Dabei entspricht die Stellung 132a dem Häckslerbetrieb, bei dem das Stroh 103, vom Schüttler 103a kommend, durch den Häcksler 101c hindurchgeleitet und zerkleinert wird, so daß das zerkleinerte Häckselgut 133 am Ausgang des Häckslers 101c entsteht. Die Stellung 132 entspricht dem Langablage-Betrieb, bei dem, wie beim Bezugszeichen 134 angedeutet, das Stroh 103 nicht durch den Häcksler 101c hindurch, sondern an diesem vorbei geleitet wird und daher unverändert bleibt.

Da der Häcksler 101c um die Drehachse 131 aus dem Bereich des Strohflusses heraus verschwenkbar ist, bleibt das Strohleitblech 102a im wesentlichen in seiner Fig. 17 dargestellten Stellung und kann nicht, wie bei den vorherigen Ausführungsformen, um die Achse der Schwenkwelle 106 um etwa 90° verschwenkt werden. Um auf einfache Weise einen sicheren Strohfluß zu gewährleisten, ist das Strohleitblech 102a um die Welle 106 beweglich gelagert. Am anderen Ende des Strohleitblechs 102a befindet sich ein in Richtung des Pfeils 136 rotierender Exzenter 135, auf dem das Ende des Strohleitblechs 102a aufliegt. Durch die Rotationsbewegung des Exzenters 135 wird das Ende des Strohleitblechs 102a in Richtung des Doppelpfeils 137 hin- und herbewegt, und zwar um die Achse der Welle 106. Durch die dadurch erzeugte gezielte Schwingbewegung des Strohleitblechs 102a wird sicher gewährleistet, daß das Stroh 103 weiterbewegt wird.

Wie in Fig. 17 ebenfalls dargestellt, kann das Strohleitblech als geschlossener Hohlkörper 124 mit Luftaustrittsschlitzen 124a ausgebildet sein. Aus den Luftaustrittsschlitzen 124a tritt die von einem externen Gebläse in den Hohlkörper 124 geblasene Luft in Richtung der Pfeile 124c aus und fördert dadurch das Stroh 103 weiter. Die Ausbildung des Strohleitblechs 102a als geschlossener Hohlkörper 124 wurde oben bereits ausführlich beschrieben. Wie ebenfalls oben bereits ausführlich beschrieben wurde, kann das Strohleitblech 102a aus zwei Teilen 102b, 102c aufgebaut sein, die durch das Gelenk 102d gelenkig miteinander verbunden sind. Ein Teil 102b des Strohleitblechs 102a liegt dabei auf einem in Richtung des Pfeiles 142 rotierenden Exzenter 141 auf, wodurch das die beiden Teile 102b und 102c verbindende Gelenk 102d in Richtung des Doppelpfeils 143 hin- und herbewegt wird.

In Fig. 17 ist schließlich noch die Ausbildung der Strohleitfläche als umlaufendes Band 125 dargestellt, wie es ebenfalls bereits oben ausführlich beschrieben wurde. Das Band 125 wird dabei von der Welle 126 angetrieben und durch die Welle 127 umgelenkt.

Bei klappbaren oder schiebbaren Häckslern wird das Strohleitblech 102 fest eingebaut und befindet sich sowohl bei Häckselbetrieb als auch bei Langablage in Stellung 102a (Figur 17). Das Blech 101 ist nicht vorhanden. Die Exzenter 105 (Figur 5) und 102e (Figur 13) entfallen (Figur 17). Bei der Variante als geschlossener Hohlkörper sind die Luftaustrittsschlitze nur an einer Seite notwendig (Figur 17). Bei der Variante als umlaufendes Band kann die Welle 127 in der Seitenwand 116 des Mähdreschers gelagert werden. Die Reversiereinrichtung entfällt.

## Patentansprüche

1. Mähdrescher mit einem Anbauhäcksler (2) und einem unter dem das Stroh abwerfenden Schüttlern (9) geneigt angeordneten Strohleitblech (8), das das Stroh in die Einzugsöffnung (5) des Anbauhäckslers (2) führt,
dadurch gekennzeichnet,
daß das Strohleitblech (8) in eine das Stroh in die Einzugsöffnung (5) des Anbauhäckslers (2) führende Stellung und in eine die Einzugsöffnung (5) des Anbauhäckslers (2) abdeckende Stellung schwenkbar ist
und daß das Strohleitblech (8) in eine Schwingbewegung versetzt werden kann.

2. Mähdrescher nach Anspruch 1, dadurch gekennzeichnet, daß die Schwingbewegung durch an dem Strohleitblech (8) anliegende, rotierende Exzenter (102e) erzeugt wird.

3. Mähdrescher nach Anspruch 1 oder 2, dadurch gekennzeichnet, daß die Schwenkwelle (107) exzentrisch gelagert und antreibbar ist.

4. Mähdrescher nach einem der vorhergehenden Ansprüche, dadurch gekennzeichnet, daß die Schwenkwelle (107) mit einem Kurbeltrieb verbunden ist.

5. Mähdrescher nach einem der vorhergehenden Ansprüche, dadurch gekennzeichnet, daß die Schwenkwelle (106) mit einer Unwucht (115) versehen ist.

6. Mähdrescher nach einem der vorhergehenden Ansprüche, dadurch gekennzeichnet, daß das Strohleitblech (8) einen Vibrator aufweist.

7. Mähdrescher nach einem der vorhergehenden Ansprüche, dadurch gekennzeichnet, daß das Strohleitblech (102, 102a) aus zwei gelenkig miteinander verbundenen Teilen (102b, 102c) besteht.

8. Mähdrescher mit einem Anbauhäcksler (2) und einem unter den das Stroh abwerfenden Schüttlern (9) geneigt angeordneten Strohleitblech (8), das das Stroh in die Einzugsöffnung (5) des Anbauhäckslers (2) führt,
**dadurch gekennzeichnet**,
daß das Strohleitblech (102) als geschlossener Hohlkörper (124) ausgebildet ist und Luftaustrittsschlitze (124a, 124b) aufweist.

9. Mähdrescher nach Anspruch 8, dadurch gekennzeichnet, daß das Strohleitblech in eine Schwingbewegung versetzt werden kann.

10. Mähdrescher nach Anspruch 9, dadurch gekennzeichnet, daß die Schwingbewegung durch an dem Strohleitblech (8) anliegende, rotierende Exzenter (102e) erzeugt wird.

11. Mähdrescher nach Anspruch 9 oder 10, dadurch gekennzeichnet, daß die Schwenkwelle (107) exzentrisch gelagert wird und antreibbar ist.

12. Mähdrescher nach einem der Ansprüche 9 bis 11, dadurch gekennzeichnet, daß die Schwenkwelle (107) mit einem Kurbeltrieb verbunden ist.

13. Mähdrescher nach einem der Ansprüche 9 bis 12, dadurch gekennzeichnet, daß die Schwenkwelle (106) mit einer Unwucht (115) versehen ist.

14. Mähdrescher nach einem der Ansprüche 9 bis 13, dadurch gekennezichnet, daß das Strohleitblech (8) einen Vibrator aufweist.

15. Mähdrescher nach einem der Ansprüche 9 bis 14, dadurch gekennzeichnet, daß das Strohleitblech (102, 102a) aus zwei gelenkig miteinander verbundenen Teilen (102b, 102c) besteht.

16. Mähdrescher nach einem der vorhergehenden Ansprüche, dadurch gekennzeichnet, daß der Anbauhäcksler (2) oder das Strohleitblech (8) in eine Stellung gebracht werden kann, in der das Stroh nicht in die Einzugsöffnung (5) des Anbauhäckslers (2) geführt wird.

17. Mähdrescher nach einem der vorhergehenden Ansprüche, dadurch gekennzeichnet, daß die Strohleitfläche ein umlaufendes Band (125) aufweist.

## Claims

1. Combine harvester with a mounted straw chopper (2) and a straw conducting plate (8) which is arranged inclined under the shakers (9) throwing off the straw and guides the straw into the gathering opening (5) of the mounted straw chopper (2), characterized in that the straw conducting plate (8) can be pivoted into a position guiding the straw into the gathering opening (5) of the mounted straw chopper (2) and into a position covering the gathering opening (5) of the mounted straw chopper (2), and in that the straw conducting plate (8) can be set in an oscillatory motion.

2. Combine harvester according to Claim 1, characterized in that the oscillatory motion is produced by rotating eccentrics (102e) bearing against the straw conducting plate (8).

3. Combine harvester according to Claim 1 or 2, characterized in that the pivoting shaft (107) is mounted eccentrically and can be driven.

4. Combine harvester according to one of the preceding claims, characterized in that the pivoting shaft (107) is connected to a crank mechanism.

5. Combine harvester according to one of the preceding claims, characterized in that the pivoting shaft (106) is provided with an unbalance (115).

6. Combine harvester according to one of the preceding claims, characterized in that the straw conducting plate (8) has a vibrator.

7. Combine harvester according to one of the preceding claims, characterized in that the straw conducting plate (102, 102a) is composed of two parts (102b, 102c) which are hinged to each other.

8. Combine harvester with a mounted straw chopper (2) and a straw conducting plate (8) which is arranged inclined under the shakers (9) throwing off the straw and guides the straw into the gathering opening (5) of the mounted straw chopper, characterized in that the straw conducting plate (102) is designed as a closed hollow body (124) and has air discharge slots (124a, 124b).

9. Combine harvester according to Claim 8, characterized in that the straw conducting plate can be set in an oscillatory motion.

10. Combine harvester according to Claim 9, characterized in that the oscillatory motion is produced by rotating eccentrics (102e) bearing against the straw conducting plate (8).

11. Combine harvester according to Claim 9 or 10, characterized in that the pivoting shaft (107) is mounted eccentrically and can be driven.

12. Combine harvester according to one of Claims 9 to 11, characterized in that the pivoting shaft (107) is connected to a crank mechanism.

13. Combine harvester according to one of Claims 9 to 12, characterized in that the pivoting shaft (106) is provided with an unbalance (115).

14. Combine harvester according to one of Claims 9 to 13, characterized in that the straw conducting plate (8) has a vibrator.

15. Combine harvester according to one of Claims 9 to 14, characterized in that the straw conducting plate (102, 102a) is composed of two parts (102b, 102c) which are hinged to each other.

16. Combine harvester according to one of the preceding claims, characterized in that the mounted straw chopper (2) or the straw conducting plate (8) can be brought into a position in which the straw is not guided into the gathering opening (5) of the mounted straw chopper (2).

17. Combine harvester according to one of the preceding claims, characterized in that the straw conducting surface has an all-round band (125).

## Revendications

1. Moissonneuse-batteuse équipée d'un hache-paille (2) et d'une tôle conductrice de paille (8) disposée selon une inclinaison sous les secoueurs (9) éjectant la paille et qui guide la paille dans l'ouverture d'amenée (5) du hache-paille (2), caractérisée en ce que la tôle conductrice de paille (8) peut être pivotée dans une position menant la paille dans l'ouverture d'amenée (5) du hache-paille (2) et en une position couvrant l'ouverture d'amenée (5) du hache-paille (2), et en ce que la tôle conductrice de paille (8) peut être mise en vibrations.

2. Moissonneuse-batteuse selon la revendication 1, caractérisée en ce que le mouvement d'oscillation est produit par des excentriques tournants (102e) s'appliquant à la tôle conductrice de paille (8).

3. Moissonneuse-batteuse selon la revendication 1 ou 2, caractérisée en ce que l'arbre de pivotement (107) est logé de façon excentrique et peut être entraîné.

4. Moissonneuse-batteuse selon l'une des revendications précédentes, caractérisée en ce que l'arbre pivotant (107) est relié à une commande à bielle.

5. Moissonneuse-batteuse selon l'une des revendications précédentes, caractérisée en ce que l'arbre pivotant (106) est pourvu d'un balourd (115).

6. Moissonneuse-batteuse selon l'une des revendications précédentes, caractérisée en ce que la tôle conductrice de paille (8) présente un vibrateur.

7. Moissonneuse-batteuse selon l'une des revendications précédentes, caractérisée en ce que la tôle conductrice de paille (102, 102a) est constituée de deux parties reliées de façon articulée l'une à l'autre (102b, 102c).

8. Moissonneuse-batteuse équipée d'un hache-paille (2) et d'une tôle conductrice de paille (8) disposée suivant une inclinaison sous les secoueurs (9) éjectant la paille et qui mène la paille dans l'ouverture d'amenée (5) du hache-paille (2), caractérisée en ce que la tôle conductrice de paille (102) est réalisée sous forme de corps creux fermé (124) et présente des fentes de sortie d'air (124a, 124b).

9. Moissonneuse-batteuse selon la revendication 8, caractérisée en ce que la tôle conductrice de paille peut être mise en vibrations.

10. Moissonneuse-batteuse selon la revendication 9, caractérisée en ce que le mouvement de vibrations est produit par des excentriques tournants (102e) s'appliquant à la tôle conductrice de paille (8).

11. Moissonneuse-batteuse selon la revendication 9 ou 10, caractérisée en ce que l'arbre pivotant (107) est logé de façon excentrique et peut être entraîné.

12. Moissonneuse-batteuse selon l'une des revendications 9 à 11, caractérisée en ce que l'arbre pivotant (107) est relié à une commande à bielle.

13. Moissonneuse-batteuse selon l'une des revendications 9 à 12, caractérisée en ce que l'arbre pivotant (106) est relié à un balourd (115).

14. Moissonneuse-batteuse selon l'une des revendications 9 à 13, caractérisée en ce que la tôle conductrice de paille (8) présente un vibrateur.

15. Moissonneuse-batteuse selon l'une des revendications 9 à 14, caractérisée en ce que la tôle conductrice de paille (102,102a) est constituée de deux parties (102b,102c) reliées de façon articulée l'une à l'autre.

16. Moissonneuse-batteuse selon l'une des revendications précédentes, caractérisée en ce que le hache-paille (2) ou la tôle conductrice de paille (8) peut être amené dans une position dans laquelle la paille n'est pas guidée dans l'ouverture d'amenée (5) du hache-paille (2).

17. Moissonneuse-batteuse selon l'une des revendications précédentes, caractérisée en ce que la surface conductrice de paille présente une courroie tournante (125).
